# EUROPÄISCHE PATENTSCHRIFT

(11) **EP 2 445 071 B1**
(45) Veröffentlichungstag und Bekanntmachung des Hinweises auf die Patenterteilung: **01.01.2014**
(21) Anmeldenummer: 10187708.2
(22) Anmeldetag: 15.10.2010
(51) Int. Cl.: H02G 3/32, H02G 15/30, H01F 27/06

(54) **Halter für Hochspannungsausleitungen in Öltransformatoren**
Holder for high voltage tubular leadthroughs in oil transformers
Support pour conduites de haute tension dans des transformateurs d'huile

(43) Veröffentlichungstag der Anmeldung: 25.04.2012
(73) Patentinhaber: ABB Technology AG, 8050 Zürich (CH)
(72) Erfinder: Brendel, Hartmut, 06120, Halle (DE)
(74) Vertreter: Partner, Lothar

(56) Entgegenhaltungen:
- WO-A2-02/063721
- JP-A- 5 067 887
- JP-A- 56 112 707

## Beschreibung

Die Erfindung betrifft einen Halter für Hochspannungsausleitungen in Öltransformatoren, mit einem plattenähnlichen, zwei flächige Außenseiten aufweisenden, länglichen Isolationsgrundmodul, welches an seinem ersten Ende eine Verbindungsvorrichtung und im Bereich seines zweiten Endes eine Aufnahmevorrichtung für ein quer verlaufendes Schirmrohr aufweist.

Es ist allgemein bekannt, dass Transformatoren mit einer Nennleistung von beispielsweise 100MVA und höher bei einer Nennspannung von 110kV und höher üblicherweise als Öltransformatoren ausgeführt werden, welche ein Gewicht von 200t aufweisen können. Hierbei ist der Transformator innerhalb eines mit Öl gefüllten Transformatorkessels angeordnet, wobei das Öl sowohl der Isolation als auch der verbesserten Kühlung dient. Die elektrische Verbindung der jeweiligen Anschlüsse des Transformators mit den Ausleitungsisolatoren an der Außenseite des Ölkessels erfolgt hierbei durch elektrische Leiter, welche bei hohen Spannungen von einem auf gleichem Potential liegenden, isolierten Schirmrohr umgeben sind, dessen Isolation entweder aus massiven Isolierstoffen oder von einem Barrierensystem gebildet wird. Das Barrieresystem ist dabei radialsymmetrisch um den betreffenden Leiter aufgebaut und umfasst ein elektrisch leitfähiges Schirmrohr mit bedarfsweise mehreren voneinander beabstandeten Isolationsbarrieren. Die für jeden einzelnen Leiter notwendigen Barrieresysteme werden innerhalb des ölgefüllten Transformatorkessel durch einen zwischen Transformator und Kesselwandung gebildeten Zwischenraum geführt, wobei jedoch isolationstechnisch bedingte Mindestabstände einzuhalten sind.

Aus Gründen der mechanischen Stabilität und Kurzschlussfestigkeit sind die isolierten Schirmrohre in bestimmten Abständen abzustützen beziehungsweise zu halten, also mechanisch entweder mit der Außenwand des Kessels oder einem geeigneten Bereich des Transformators zu verbinden. Hierzu werden sogenannte Halter verwendet, welche als Isolatoren auszuführen und beispielsweise aus dem Material Pressspan gefertigt sind. Die Isolationsfähigkeit eines Halters als solchen ist bei identischer Isolationsstrecke geringer als die Isolationsfähigkeit von reinem Öl.

Nachteilig ist jedoch, dass Transformatoren dieser Größe Unikate sind oder zumindest nur in Kleinstserien gefertigt sind, so dass sich für jede Transformatorgeometrie andere Anforderungen an die Gestaltung eines jeweiligen Halters ergeben. Die Anforderungen an einen Halter variieren sogar innerhalb mehrerer Halter für ein und denselben Transformatortyp, weil sich für jeden Anbringungsort eines Halters im Transformatorkessel andere Potentialverhältnisse beim Betrieb des Transformators ergeben. Daher resultiert eine hohe Variantenvielfalt bei der Gestaltung der an die jeweiligen zu erwartenden Potentialverhältnisse angepassten Halter.

Diese Variantenvielfalt lässt sich dadurch reduzieren, dass der Abstand zwischen Transformator und Kesselwandung entsprechend erhöht wird, wodurch auch nicht optimal an die jeweiligen Potentialverhältnisse angepasste Halter verwendbar sind. Dies hat jedoch den erheblichen Nachteil, dass der Transformator mit seinem Ölkessel größer auszugestalten ist, als unbedingt erforderlich.

Öltransformatoren und die Verlegung der elektrischen Leiter darin sind z.B. aus den Dokumenten WO 02/063721 und JP 56 112 707 bekannt.

Ausgehend von diesem Stand der Technik ist es Aufgabe der Erfindung, einen Halter für Ausleitungen in Öltransformatoren zur Verfügung zu stellen, welcher besonders flexibel und platzsparend ist.

Diese Aufgabe wird gelöst durch einen Halter für Hochspannungsausleitungen der eingangs genannten Art. Dieser ist dadurch gekennzeichnet, dass das Isolationsgrundmodul zwischen erstem und zweiten Ende hin angewinkelt ist, so dass eine kürzere und eine gegenüberliegende längere Seitenkante gebildet ist, dass quer zur länglichen Erstreckung des Isolationsgrundmoduls mehrere benachbarte, dieses an dessen flächigen Außenseiten und der kürzeren Seitenkante in einer jeweiligen Ebene umlaufende Schlitze vorgesehen sind und dass wenigstens eine U-förmige Isolationsplatte in einen der Schlitze formschlüssig eingepasst und eingeklebt ist, wobei sie von der kürzeren Seite her über das Isolationsgrundmodul geschoben ist und über dieses hinaus ragt.

Die Grundidee der Erfindung besteht darin, den Halter entsprechend den jeweiligen Randbedingungen des zu isolierenden Potentials individuell mit jeweiligen kriechwegverlängernden Isolationsplatten quer zur länglichen Erstreckung des Halters zu versehen. Dies geschieht vorzugsweise entsprechend einer Einzelbetrachtung des geplanten Einbauortes für jeden Halter gesondert, wobei betont sei, dass ein isolationstechnisches Optimum gerade nicht dadurch erreicht wird, dass eine möglichst hohe Anzahl an Isolationsplatten verwendet wird. Dies wird vielmehr durch ein gezieltes Einsetzen weniger Isolationsplatten an zuvor ermittelten Positionen erreicht.

Ein erfindungsgemäßer Schlitz im Isolationsgrundmodul umläuft dieses an wenigstens drei Seiten des Querschnittes in einer Ebene, nämlich längs der beiden flächigen Außenseiten und quasi als dazwischen liegender Verbindungsschlitz quer über die kürzere Seitenkante. Eine dazu passende U-förmige Isolationsplatte, deren Plattendicke demgemäß knapp der Dicke des teilweise umlaufenden Schlitzes entspricht, beispielsweise 3mm, lässt sich leicht von der kürzeren Seitenkante aus auf den gewünschten Schlitz schieben und mit einem geeigneten Kleber fixieren, so dass eine kraft- und formschlüssige, kriechwegfeste Verbindung gegeben ist. Der Kleber dient hierbei primär der Vermeidung, dass sich ein Kriechweg über den Schlitz ausbilden kann. Durch die für diese besonders einfache Handhabungsweise jedoch erforderliche Aussparung in der Isolationsplatte ist die längere Seitenkante des Isolationsgrundmoduls jedoch gerade nicht mit einer kriechwegverlängernden Barriere versehen.

Dies wird jedoch dadurch kompensiert, dass das Isolationsgrundmodul angewinkelt ist und dadurch jeweils eine kürzere Seitenkante und eine gegenüber liegende längere Seitenkante gebildet sind. Die längere Seitenkante weist demgemäß ohnehin einen längeren Kriechweg auf als die kürzere Seitenkante, so dass für die längere Seitenkante eine Verlängerung des Kriechwegs durch eine quer dazu angeordnete Isolationsplatte nicht zwangsweise nötig ist. Dennoch ist es sinnvoll, den jeweiligen Schlitz komplett auch über die längere Seitenkante des Isolationsgrundmoduls umlaufen zu lassen und durch diesen mechanisch nicht benötigten Schlitzbereich zumindest den Kriechweg an der längeren Seitenkante in einem gewissen Umfang zu verlängern. Ebenso tragen auch die komplett unbenutzten Schlitze zu einer verbesserten Isolation bei.

Im eingebauten Zustand ist das Isolationsgrundmodul an seinem ersten Ende waagerecht im Transformatorkessel angeordnet und an seinem zweiten Ende nach oben angewinkelt. Durch die Anwinkelung wird eine erhöhte Länge des Isolationsgrundmoduls bei vorgegebenem Abstand zwischen Transformator und Kesselwandung erreicht, was sich sowohl positiv auf das Isolationsvermögen als auch positiv auf einen verringerten Platzbedarf auswirkt.

Durch die individuelle Anpassbarkeit des erfindungsgemäßen Halters ist es in vorteilhafter Weise ermöglicht, für jeden Einbauort eines Halters eine isolationstechnisch optimierte und daher sehr platzsparende Variante zu bereitzustellen, so dass letztendlich das Volumen des ölgefüllten Raums innerhalb eines Ölkessels beziehungsweise die Größe des Ölkessels bei gleicher Transformatorleistung reduziert werden kann.

Entsprechend einer bevorzugten Ausgestaltung der Erfindung ist im Bereich des ersten Endes des Isolationsgrundmoduls ein erster Bereich mit überwiegend gerader Erstreckung vorgesehen, innerhalb dessen die benachbarten Schlitze parallel zueinander angeordnet sind. Dieser lineare Bereich erweist sich als isolations- und fertigungstechnisch als vorteilhaft und umfasst beispielsweise wenigstens fünf parallele Schlitze, welche beispielsweise in einem Abstand von jeweils 1cm bis 1,5cm angeordnet sind.

Gemäß einer weiteren Variante ist im angewinkelten Bereich des Isolationsgrundmoduls wenigstens ein gegenüber den Schlitzen im ersten Bereich angewinkelter Schlitz vorgesehen. Auf diese Weise ist gewährleistet, dass auch im angewinkelten Bereich wenigstens eine Isolationsplatte annähernd quer zum Kriechweg längs der kürzeren Seitenkante angeordnet ist. Dies ist für eine Erhöhung der Isolationsfähigkeit besonders günstig. Entsprechendes gilt für eine weitere Ausgestaltungsvariante, gemäß derer im angewinkelten Bereich des Isolationsgrundmoduls mehrere zueinander gewinkelte Schlitze vorgesehen sind.

Als günstig hat es sich erwiesen, wenn das Isolationsgrundmodul in einem Winkelbereich von 45° bis 135° angewinkelt ist, wobei der Bereich größer 90° besonders bevorzugt ist. Durch den dann bogenähnlichen und im Extremfall schon fast spiralähnlichen Verlauf des Isolationsgrundmoduls wird dessen abgewickelte Länge im Verhältnis zu einer verfügbaren Breite innerhalb des Ölkesses deutlich erhöht, wodurch in raumsparender Weise eine verbesserte Isolationsfähigkeit erreicht ist. In ähnlicher Weise lässt sich die Isolationsfähigkeit auch durch eine abschnittsweise Verjüngung des Isolationsgrundmoduls in seiner Breite zwischen kürzerer und längerer Seitenkante steigern. Selbstverständlich sind auch andere kriechwegverlängernden Formgebungen der beiden Seitenkanten möglich.

Um eine besonders einfache Montage eines erfindungsgemäßen Halters zu gewährleisten, ist die Verbindungsvorrichtung steckbar, also formschlüssig mit einem entsprechenden Gegenstück am Transformator oder Transformatorkessel verbindbar und bedarfsweise auch fixierbar, beispielsweise mit einem Haltebolzen. Die Verbindungsvorrichtung ist im einfachsten Fall als gefräster Fortsatz des Isolationsgrundmoduls mit beispielsweise einem zylindrischen oder rechteckigen Querschnitt ausgeführt.

In einer besonders bevorzugten Variante weist die Aufnahmevorrichtung die Form eines inversen beziehungsweise konkav geformten Kreissegmentes auf. Der Radius dieses Kreissegmentes richtet sich überwiegend nach dem Radius des Schirmrohres oder der des Barrieresystems, welches in eingebautem Zustand von dem Halter zu tragen ist. Typische Radien liegen beispielsweise zwischen 5cm und 12cm. Die Aufnahmevorrichtung ist im einfachsten Fall als gefräster Fortsatz des Isolationsgrundmoduls zu fertigen. Aus mechanischen Gründen sollte im eingebauten Zustand des Halters das Kreissegment nach oben geöffnet sein, so dass sich ein stabiles Gleichgewicht eines dort getragenen Schirmrohres ergibt.

Dennoch erweist es sich als sinnvoll, wenn im Bereich des zweiten Endes wenigstens auf einer der beiden flächige Außenseiten des Isolationsgrundmoduls eine riemenartige Haltevorrichtung vorgesehen ist, mit welcher ein Schirmrohr in dem inversen beziehungsweise konkaven Kreissegment fixierbar ist. Hierbei umgreift ein Riemen oder riemenähnliches Band einen Großteil des Umfangs des Schirmrohres und übt dabei eine Fixierkraft in Richtung des Kreissegmentes aus. Entsprechend umgreift der Riemen an seiner anderen Seite beispielsweise eine achsenähnliche Querstrebe, welche mit dem Isolationsgrundmodul verbunden ist. Hierdurch wird der Riemen gespannt. Eine beidseitig des beispielsweise 3cm dicken Isolationsmoduls angeordnete riemenartige Haltevorrichtung ist konstruktiv einfach zu fertigen und reduziert eventuelle Torsionsmomente auf die dann durch das Isolationsgrundmodul geführte achsenähnliche Querstrebe. In besonders vorteilhafter Weise ist der Riemen durch eine entsprechende längenverstellbare Vorrichtung spannbar. Dies ermöglicht eine besonders einfache Montage eines Schirmrohres und seine anschließende Fixierung.

In einer besonders bevorzugten Ausführungsform des Halters ist dieser zumindest teilweise aus gefrästem Presspan gefertigt. Dies betrifft insbesondere das Isolationsgrundmodul und die U-förmigen Isolationsplatten. Das Isolationsgrundmodul ist erfindungsgemäß plattenähnlich und daher auch gut aus einer Platte entsprechender Dicke zu fertigen, wobei hier Fräsen besonders geeigneter und flexibeler Bearbeitungsweg ist. Eine geeignete Plattendicke beträgt beispielsweise 3cm, wobei die Schlitze beispielsweise mit einer Tiefe von 1 cm einzufräsen sind. Hierdurch wird eine isolationstechnisch und mechanisch besonders günstige Verbindung mit den Isolationsplatten ermöglicht. Auch diese müssen zur Gewährleistung der Steckbarkeit eine plattenähnliche Struktur von einigen Millimetern Dicke aufweisen. Unabhängig von der Art der Verarbeitung ist Pressspan an sich ein bewährter Isolationswerkstoff zum Einsatz in ölgefüllten Komponenten, selbstverständlich sind aber auch andere Isolationsmaterialien denkbar.

Die erfindungsgemäßen Vorteile eines erfindungsgemäßen Halters wirken sich in eingebautem Zustand auch auf einen Öltransformator mit Ölkessel und mit einer darin angeordneten Hochspannungsausleitung mit Schirmrohr aus. Der Ölkessel kann dann nämlich aufgrund des geringeren Raumbedarfs in vorteilhafter Weise kleiner ausgeführt werden, wie bereits zuvor erläutert.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine exemplarische Seitenansicht auf einen Halter mit Schirmrohr und
- Fig. 2: eine dritte U-förmige Isolationsplatte auf einem Isolationsgrundmodul.

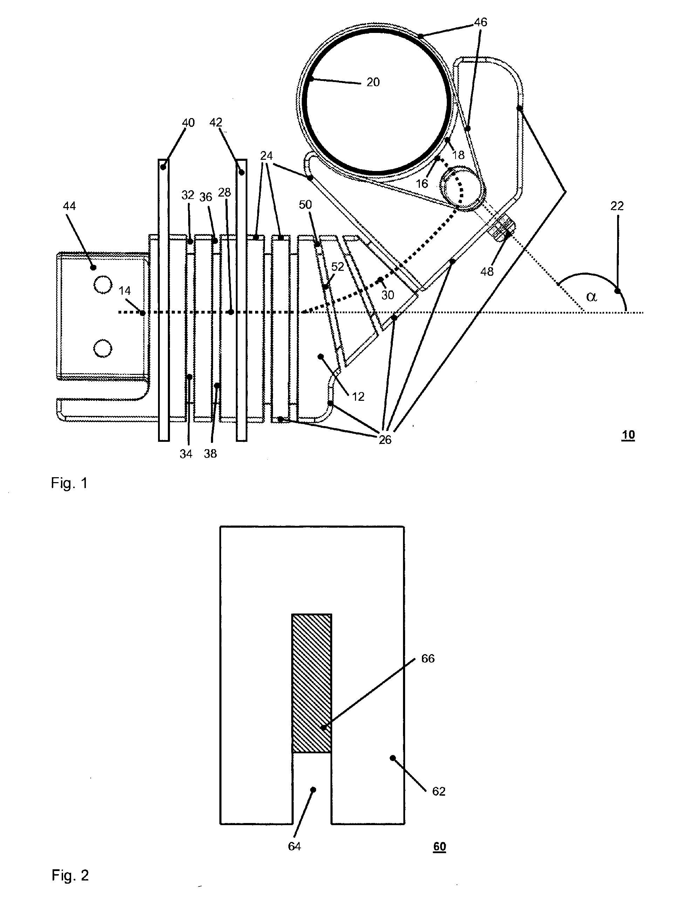

Fig. 1 zeigt eine exemplarische Seitenansicht 10 auf einen Halter mit Schirmrohr. Kernelement des Halters ist ein Isolationsgrundmodul 12, welches sich von seinem ersten Ende 14 bis zum zweiten Ende 16 längs eines geraden Bereiches 28 und eines sich daran anschließenden gewinkelten oder gebogenen Bereiches 30 erstreckt. Der gesamte Biegewinkel längs der den länglichen Verlauf andeutenden gestrichelten Linie 28, 30 summiert sich auf ca. 130°, wie mit der Bezugsziffer 22 angedeutet. Es ist gut zu sehen, wie die Länge des Isolationsgrundmoduls 12 und damit auch dessen Isolationsfähigkeit durch den gebogenen Bereich 30 erheblich verlängert wird, ohne dass dieses zu einem signifikant höheren Platzbedarf führt. Entsprechend der Biegung ergibt sich eine kürzere Seitenkante 24 und eine längere Seitenkante 26, wobei letztere demgemäß auch einen längeren Kriechweg aufweist.

Das Isolationsgrundmoduls 12 ist aus einer Pressspanplatte von einigen Zentimetern Dicke gefertigt, wobei vorwiegend quer zur länglichen Erstreckung 28,30 eine Mehrzahl an komplett umlaufende Schlitzen vorgesehen sind, wobei exemplarisch drei davon mit den Bezugsziffern 32+34, 36+38, 50+52 versehen sind. Diese Schlitze alleine führen schon zu einer verbesserten Isolationsfähigkeit des Isolationsgrundmoduls 12. Zur weiteren Verbesserung der Isolationsfähigkeit des Halters insbesondere im Bereich der kürzeren Seitenkante 24 sind noch zwei U-förmige Isolationsplatten 40, 42 in zwei der umlaufenden Schlitze von der kürzeren Seitenkante 24 her eingeschoben und eingeklebt.

Am ersten Ende 14 des Grundisolationsmoduls 12 ist als dessen Fortsatz eine Verbindungsvorrichtung 44 vorgesehen, welche als Steckverbindung ausgeführt ist. Am zweiten Ende 16 des Grundisolationsmoduls 12 ist ebenfalls als dessen Fortsatz ein konkaves Kreissegment 18 eingefräst, welches in etwa denselben Durchmesser aufweist, wie ein von ihm gehaltenes Rohr 20. Dieses ist von einer riemenartigen Vorrichtung 46 umgriffen, in das konkave Kreissegment gepresst und somit sicher fixiert. Die riemenartige Vorrichtung 46 umgreift zudem schlaufenartig eine achsenähnliche Spannvorrichtung, welche mit einer Stellschraube 48 längenverstellbar ist und somit den Anpressdruck der riemenartigen Vorrichtung 46 bestimmt.

Fig. 2 zeigt eine dritte U-förmige Isolationsplatte 62 auf einem Isolationsgrundmodul in einer Ansicht 60. Um die eigentlich rechteckförmige Form der Isolationsplatte 62, welche beispielsweise eine Grundfläche von 20cm mal 35cm aufweist, in einen in dem Isolationsgrundmodul vorgesehenen Schlitz schieben zu können, ist eine Aussparung 64 vorgesehen, deren offenes Ende im Bereich der längeren Seitenkante des Isolationsgrundmoduls liegt, welches in diesem Fall mit einem Querschnitt mit der Bezugsnummer 66 angedeutet ist. Vorzugsweise sind alle Schlitze des Isolationsgrundmoduls derart ausgeprägt, dass eine Isolationsplatte 62 in jeden umlaufenden Schlitz geschoben und verklebt werden kann.

**Bezugszeichenliste**

| | |
|---|---|
| 10 | exemplarische Seitenansicht auf einen Halter mit Schirmrohr |
| 12 | Isolationsgrundmodul |
| 14 | erstes Ende des Isolationsgrundmoduls |
| 16 | zweites Ende des Isolationsgrundmoduls |
| 18 | Aufnahmevorrichtung in Form eines inversen Kreissegmentes |
| 20 | Schirmrohr |
| 22 | Winkel |
| 24 | kürzere Seitenkante |
| 26 | längere Seitenkante |
| 28 | längliche Erstreckung in geradem Bereich |
| 30 | längliche Erstreckung in angewinkeltem Bereich |
| 32 | erster Schlitz in kürzerer Seitenkante |
| 34 | erster Schlitz in erster flächiger Außenseite |
| 36 | zweiter Schlitz in kürzerer Seitenkante |
| 38 | zweiter Schlitz in erster flächiger Außenseite |
| 40 | erste U-förmige Isolationsplatte |
| 42 | zweite U-förmige isolationsplatte |
| 44 | Verbindungsvorrichtung |
| 46 | riemenartige Haltevorrichtung |
| 48 | Spannvorrichtung |
| 50 | dritter Schlitz in kürzerer Seitenkante in angewinkeltem Bereich |
| 52 | dritter Schlitz in erster flächiger Außenseite in angewinkeltem Bereich |
| 60 | dritte U-förmige Isolationsplatte auf einem Isolationsgrundmodul |
| 62 | dritte U-förmige Isolationsplatte |
| 64 | Aussparung |
| 66 | Querschnitt eines Isolationsgrundmoduls |

## Patentansprüche

1. Halter (10) für Hochspannungsausleitungen in Öltransformatoren, mit einem plattenähnlichen, zwei flächige Außenseiten aufweisenden, länglichen Isolationsgrundmodul (12, 66), welches an seinem ersten Ende (14) eine Verbindungsvorrichtung (44) und im Bereich seines zweiten Endes (16) eine Aufnahmevorrichtung (18) für ein quer verlaufendes Schirmrohr (20) aufweist,
**dadurch gekennzeichnet,**
**dass** das Isolationsgrundmodul (12, 66) zwischen erstem (14) und zweiten (16) Ende hin angewinkelt (22) ist, so dass eine kürzere (24) und eine gegenüberliegende längere (26) Seitenkante gebildet ist, dass quer zur länglichen Erstreckung (28, 30) des Isolationsgrundmoduls (12, 66) mehrere benachbarte, dieses an dessen flächigen Außenseiten und der kürzeren Seitenkante (24) in einer jeweiligen Ebene umlaufende Schlitze (32+34, 36+38, 50+52) vorgesehen sind und dass wenigstens eine U-förmige Isolationsplatte (40, 42, 62) in einen der Schlitze (32+34, 36+38, 50+52) formschlüssig eingepasst *und eingeklebt* ist, *wobei sie von der kürzeren Seite her über das Isolationsgrundmodul geschoben ist und über dieses hinaus ragt.*

2. Halter nach Anspruch 1, **dadurch gekennzeichnet, dass** im Bereich des ersten Endes (14) des Isolationsgrundmoduls (12, 66) ein erster Bereich mit überwiegend gerader Erstreckung (28) vorgesehen ist, innerhalb dessen die benachbarten Schlitze (32+34, 36+38) parallel zueinander angeordnet sind.

3. Halter nach Anspruch 2, **dadurch gekennzeichnet, dass** im angewinkelten Bereich (30) des Isolationsgrundmoduls (12, 66) wenigstens ein gegenüber den Schlitzen (32+34, 36+38) im ersten Bereich (28) angewinkelter Schlitz (50+52) vorgesehen ist.

4. Halter nach Anspruch 3, **dadurch gekennzeichnet, dass** im angewinkelten Bereich (30) des Isolationsgrundmoduls (12, 66) mehrere zueinander gewinkelte Schlitze vorgesehen sind.

5. Halter nach einem der vorherigen Ansprüche, **dadurch gekennzeichnet, dass** das Isolationsgrundmodul (12, 66) in einem Winkelbereich von 45° bis 135° (22) angewinkelt ist.

6. Halter nach einem der vorherigen Ansprüche, **dadurch gekennzeichnet, dass** das das Isolationsgrundmodul (12, 66) zumindest abschnittsweise zu seinem zweiten Ende (16) hin in seiner Breite zwischen kürzerer (24) und längerer (26) Seitenkante verjüngt ist.

7. Halter nach einem der vorherigen Ansprüche, **dadurch gekennzeichnet, dass** die Verbindungsvorrichtung (44) steckbar ist.

8. Halter nach einem der vorherigen Ansprüche, **dadurch gekennzeichnet, dass** die Aufnahmevorrichtung (18) die Form eines inversen Kreissegmentes aufweist.

9. Halter nach Anspruch 8, **dadurch gekennzeichnet, dass** im Bereich des zweiten Endes (16) wenigstens auf einer der beiden flächige Außenseiten des Isolationsgrundmoduls (12, 66) eine riemenartige Haltevorrichtung (46) vorgesehen ist, mit welcher ein Schirmrohr (20) in dem inversen Kreissegment (18) fixierbar ist.

10. Halter nach Anspruch 9, **dadurch gekennzeichnet, dass** die wenigstens eine riemenartige Haltevorrichtung (46) spannbar (48) ist.

11. Halter nach einem der vorherigen Ansprüche, **dadurch gekennzeichnet, dass** dieser zumindest teilweise aus gefrästem Presspan gefertigt ist.

12. Öltransformator mit Ölkessel und einer in diesem angeordneten Hochspannungsausleitung mit einem Schirmrohr (20), **dadurch gekennzeichnet, dass** das Schirmrohr (20) zumindest abschnittsweise von wenigstens einem Halter (10) nach einem der Ansprüche 1 bis 11 gehalten ist.

## Claims

1. Holder (10) for high-voltage end leads in oil transformers, comprising a plate-like, elongated basic insulation module (12, 66) which has two planar outer sides and which has a connecting device (44) at its first end (14) and an accommodating device (18) for a transversely running screen tube (20) in the region of its second end (16), **characterized in that** the basic insulation module (12, 66) is angled (22) between the first end (14) and the second end (16), such that a shorter side edge (24) and an opposite longer side edge (26) is formed, **in that** a plurality of adjacent slots (32+34, 36+38, 50+52) are provided transversely to the elongated extent (28, 30) of the basic insulation module (12, 66), said slots (32+34, 36+38, 50+52) encircling the latter at its planar outer sides and at the shorter side edge (24) in a respective plane, and **in that** at least one U-shaped insulation plate (40, 42, 62) is fitted and bonded into one of the slots (32+34, 36+38, 50+52) in a positive-locking manner, wherein the insulation plate is pushed over the insulation module from the shorter side and protrudes beyond said insulation module.

2. Holder according to Claim 1, **characterized in that** a first region having a mainly straight extent (28) is provided in the region of the first end of the basic insulation module (12, 66), within which region the adjacent slots (32+34, 36+38) are arranged parallel to one another.

3. Holder according to Claim 2, **characterized in that** at least one slot (50+52) angled relative to the slots (32+34, 36+38) in the first region (28) is provided in the angled region (30) of the basic insulation module (12, 66).

4. Holder according to Claim 3, **characterized in that** a plurality of slots angled relative to one another are provided in the angled region (30) of the basic insulation module (12, 66).

5. Holder according to one of the preceding claims, **characterized in that** the basic insulation module (12, 66) is arranged within an angular range of 45° to 135° (22).

6. Holder according to one of the preceding claims, **characterized in that** the basic insulation module (12, 66) is narrowed in its width between shorter side edge (24) and longer side edge (26), at least in sections, towards its second end (16).

7. Holder according to one of the preceding claims, **characterized in that** the connecting device (44) is pluggable.

8. Holder according to one of the preceding claims, **characterized in that** the accommodating device (18) has the shape of an inverse circle segment.

9. Holder according to Claim 8, **characterized in that** a belt-like holding device (46) is provided in the region of the second end (16), at least on one of the two planar outer sides of the basic insulation module (12, 66), with which holding device (46) a screen tube (20) can be fixed in the inverse circle segment (18).

10. Holder according to Claim 9, **characterized in that** the at least one belt-like holding device (46) can be tensioned (48).

11. Holder according to one of the preceding claims, **characterized in that** said holder is produced at least partly from milled pressboard.

12. Oil transformer comprising an oil tank and a high-voltage end lead arranged in the latter and having a screen tube (20), **characterized in that** the screen tube (20) is held, at least in sections, by at least one holder (10) according to one of Claims 1 to 11.

## Revendications

1. Support (10) pour lignes de sortie haute tension dans des transformateurs à huile, comprenant un module de base isolant (12, 66) allongé en forme de plaque présentant deux côtés extérieurs plats, lequel module de base isolant présente, au niveau de sa première extrémité (14), un dispositif de connexion (44) et dans la région de sa deuxième extrémité (16), un dispositif de réception (18) pour un tube écran (20) s'étendant transversalement,
**caractérisé en ce que** le module de base isolant (12, 66) est coudé (22) entre la première (14) et la deuxième (16) extrémité de telle sorte qu'il se forme une arête latérale plus courte (24) et une arête latérale plus longue opposée (26), **en ce que** transversalement à l'étendue longitudinale (28, 30) du module de base isolant (12, 66) sont prévues plusieurs fentes adjacentes (32+34, 36+38, 50+52), entourant celui-ci au niveau de ses côtés extérieurs plats et au niveau de l'arête latérale plus courte (24) dans un plan respectif et **en ce qu'**au moins une plaque isolante en forme de U (40, 42, 62) est ajustée par engagement positif et collé dans l'une des fentes (32+34, 36+38, 50+52), celle-ci étant poussée depuis le côté plus court par-dessus le module de base isolant et faisant saillie au-delà de celui-ci.

2. Support selon la revendication 1, **caractérisé en ce que** dans la région de la première extrémité (14) du module de base isolant (12, 66) est prévue une première région s'étendant essentiellement en ligne droite (28), à l'intérieur de laquelle les fentes adjacentes (32+34, 36+38) sont disposées parallèlement les unes aux autres.

3. Support selon la revendication 2, **caractérisé en ce que** dans la région coudée (30) du module de base isolant (12, 66) est prévue au moins une fente (50+52) coudée par rapport aux fentes (32+34, 36+38) dans la première région (28).

4. Support selon la revendication 3, **caractérisé en ce que** dans la région coudée (30) du module de base isolant (12, 66) sont prévues plusieurs fentes coudées les unes par rapport aux autres.

5. Support selon l'une quelconque des revendications précédentes, **caractérisé en ce que** le module de base isolant (12, 66) est coudé dans une plage angulaire de 45° à 135° (22).

6. Support selon l'une quelconque des revendications précédentes, **caractérisé en ce que** le module de base isolant (12, 66) se rétrécit au moins en partie vers sa deuxième extrémité (16) en largeur entre l'arête latérale plus courte (24) et l'arête latérale plus longue (26).

7. Support selon l'une quelconque des revendications précédentes, **caractérisé en ce que** le dispositif de connexion (44) peut être enfiché.

8. Support selon l'une quelconque des revendications précédentes, **caractérisé en ce que** le dispositif de réception (18) présente la forme d'un segment de cercle inversé.

9. Support selon la revendication 8, **caractérisé en ce que** dans la région de la deuxième extrémité (16) est prévu, au moins sur l'un des deux côtés extérieurs plats du module de base isolant (12, 66), un dispositif de retenue en forme de courroie (46) avec lequel un tube écran (20) peut être fixés dans le segment de cercle inversé (18).

10. Support selon la revendication 9, **caractérisé en ce que** l'au moins un dispositif de retenue en forme de courroie (46) peut être tendu (48).

11. Support selon l'une quelconque des revendications précédentes, **caractérisé en ce que** celui-ci est fabriqué au moins en partie en presspan fraisé.

12. Transformateur à huile comprenant une chaudière à mazout et une ligne de sortie haute tension disposée dans celui-ci, avec un tube écran (20), **caractérisé en ce que** le tube écran (20) est retenu au moins en partie par au moins un support (10) selon l'une quelconque des revendications 1 à 11.
